(19) **Europäisches Patentamt**
**European Patent Office**
**Office européen des brevets**

(11) **EP 2 349 766 B1**

(12) **EUROPEAN PATENT SPECIFICATION**

(45) Date of publication and mention
of the grant of the patent:
**12.12.2012 Bulletin 2012/50**

(21) Application number: **08875888.3**

(22) Date of filing: **21.10.2008**

(51) Int Cl.:
*B60T 1/10* (2006.01)          *B60W 10/184* (2012.01)
*B60W 10/196* (2012.01)      *B60W 10/198* (2012.01)
*B60W 40/09* (2012.01)        *B60W 10/08* (2006.01)
*B60K 6/10* (2006.01)          *B60K 6/12* (2006.01)
*B60K 37/00* (2006.01)        *B60W 30/18* (2012.01)

(86) International application number:
**PCT/IB2008/055363**

(87) International publication number:
**WO 2010/046733 (29.04.2010 Gazette 2010/17)**

(54) **METHOD AND SYSTEM FOR DETERMINING THE ABILITY OF A DRIVER OF A HYBRID VEHICLE AND VEHICLE EQUIPPED WITH SUCH A SYSTEM**

VERFAHREN UND SYSTEM ZUR BESTIMMUNG DER FÄHIGKEIT EINES FAHRERS EINES HYBRIDFAHRZEUGS UND MIT SOLCH EINEM SYSTEM AUSGESTATTETES FAHRZEUG

PROCÉDÉ ET SYSTÈME DE DÉTERMINATION DE LA CAPACITÉ D'UN CONDUCTEUR D'UN VÉHICULE HYBRIDE ET VÉHICULE ÉQUIPÉ D'UN TEL SYSTÈME

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**03.08.2011 Bulletin 2011/31**

(73) Proprietor: **Renault Trucks**
**69800 Saint Priest (FR)**

(72) Inventors:
• **LE BRUSQ, Philippe**
**F-69003 Lyon (FR)**

• **VALAYER, Richard**
**F-69740 Genas (FR)**

(74) Representative: **Putet, Gilles**
**Renault Trucks**
**VTEC France-Corporate Patents TER E70 2 12**
**99, route de Lyon**
**69806 Saint Priest Cedex (FR)**

(56) References cited:
**WO-A-2006/001809          WO-A-2008/075502**
**DE-A1-102005 032 196    FR-A- 2 910 868**
**US-A1- 2002 171 541      US-A1- 2007 029 874**

**Description**

TECHNICAL FIELD OF THE INVENTION

This invention concerns a method for determining the ability of a driver of a hybrid vehicle to recover, via an electric generator, a part of the kinetic energy of the vehicle during deceleration. The invention also concerns a system for determining such an ability of a driver and a hybrid vehicle equipped with such a system.

BACKGROUND OF THE INVENTION

A hybrid electric vehicle is known to be equipped with an internal combustion engine and a reversible electrical machine, both of which can provide kinetic energy to the driveline of the vehicle. The reversible electrical machine can function as a generator, in order to generate electricity to be stored in a battery set for later use, or as a motor to deliver torque to a crankshaft of the engine. Alternatively, a hybrid vehicle can be equipped with several electrical machines, some of them being generators dedicated to generating electricity, whereas the other ones are motors used to drive a crankshaft of the vehicle.

Also, other hybrids vehicles use another types of recovery device to recover the kinetic energy. Such recovery devices can comprise a flywheel, where power is stored under mechanical form. Such devices can also comprise a reversible hydraulic or pneumatic motor/pump able to store and retrieve the recovered power under hydraulic or pneumatic form.

WO 2008/075502 discloses:
A method for determining the ability to recover, via at least one recovery device a part of the kinetic energy of the vehicle during a deceleration, this method comprising at least the following steps:

a) determination of a braking power to be generated by the recovery device at a given point of time, during deceleration of the vehicle, or of the braking energy generated by the recovery device, for a deceleration of the vehicle;
b) determination of the braking power or of the braking energy to be dissipated by each braking or retarding device of the vehicle, apart from the recovery device, at said point of time, or during said deceleration;
c) computation of the sum of the braking powers or the sum of the braking energies;
d) computation of the ratio of the braking power on the braking powers sum.

When driving an hybrid vehicle, for example an hybrid electric vehicle, it is important that the driver maximizes the transfer of power to the battery set when he reduces the speed of the vehicle, that is during deceleration phases. Actually, the instant power forwarded to the battery set through an electric machine working as a generator can be used later in order to drive the vehicle. On the contrary, power dissipated in other braking or retarding devices of the vehicle, such as the service brake, an exhaust brake or an eddy current retarder, is wasted. It is therefore essential to be able to determine how a driver can efficiently use the electric generator of a hybrid electric vehicle, or any other recovery device in order to recover a substantial part of the kinetic energy of the vehicle during deceleration.

JP-A-2007/210487 discloses a device for displaying information related to driving operation of a vehicle where the driver's operation is compared to a "best practice" previously recorded. Such an approach implies that data relating to the best practice for a given driving pattern must be computed or measured beforehand and stored for each pattern. This is complicated and time consuming, thus expensive.

SUMMARY OF THE INVENTION

The invention aims at proposing a new method for determining the ability of a driver of a hybrid vehicle where one does not need to predetermine and load in a memory some data with respect to a so-called "best practice", while providing an accurate information with respect to the ability of the driver to recover a substantial part of the kinetic energy of the vehicle via an electric generator.

To this purpose, the invention concerns a method for determining the ability of a driver of a hybrid vehicle to recover, via at least one recovery device, a part of the kinetic energy of the vehicle during a deceleration, this method comprising at least the following steps:

a) determination of a braking power generated by the recovery device, at a given point of time during deceleration of the vehicle, or of the braking energy generated by the recovery device for a deceleration of the vehicle,
b) determination of the braking power or of the braking energy dissipated by each braking or retarding device of the vehicle, apart from the recovery device, at said point of time, or during said deceleration,
c) computation of the sum of the braking powers determined in steps a) and b), and

d) computation of the ratio of the braking power determined in step a) on the sum of the braking powers determined in step c) or of the ratio of the braking energy determined in step a) on the braking energies sum determined in step c).

The order of steps a) and b) can be as mentioned here-above or reverse.

Thanks to the invention, the ratio computed in step d) is representative of the proportion of the kinetic energy which is recovered via the recovery device as compared with respect to the total instant power dissipated during a braking phase, via the recovery device, which can be an electric machine working as a generator, and via the other braking or retarding devices of the vehicle, such as its service brake or a similar device. If one works on braking energies, the ratio is also representative of the proportion of energy which is recovered, as compared to the total braking energy for one deceleration. In other words, the method of the invention determines the ability of the driver to use the recovery device, instead of the other braking or retarding devices of the vehicle. The higher this ratio is, the better the ability of the driver is, since, for instance, the energy recovered via the electric generator can be stored in a battery set and used afterwards, when the electric machine or another machine works as a motor.

According to an advantageous aspect of the invention, the method also includes a step e) where one displays, within the driver's compartment of the vehicle, an information representative of the value of the ratio computed in step d). This enables to inform the driver, basically in real time or almost in real time, of his performance with respect to energy recovery. Therefore, the driver can adapt his behavior in order to obtain a better value on the display. Moreover, if a passenger can visualize this information, this passenger, for instance a driving school instructor or a fleet manager, can comment on the driver's ability to recover energy on the basis of the information displayed within the driver's compartment Advantageously, display of the value of the ratio computed in step d) is made in a graphical way, which is easy to read and understand for any user. For instance, the display can be provided with ten bars which are either dark or clear, depending on the value of the ratio.

The braking power or the braking energy determined in step a) is advantageously based on the product of the intensity by the voltage of an electric current generated by the electric generator, at the point of time or during the deceleration considered.

The working powers determined in step b) can include the braking power of a service brake sub-assembly, the braking power of an exhaust brake, the braking power of a compression brake and/or the braking power of a driveline retarder, such as an eddy current retarder or a hydraulic retarder. Alternatively, if one works with braking energies, the braking energies determined in step b) can include the braking energy of a service brake sub-assembly, the braking energy of an exhaust brake, the braking energy of a compression brake and the braking energy of a driveline retarder.

According to another advantageous aspect of the invention, steps a) to d), and possibly step e) of determining braking powers, are repeated at different points of time during a deceleration of the vehicle, two consecutive points of time being separated by a given interval. This enables to compute the ratio of step d) at different points of time during deceleration of a vehicle and, possibly to inform the driver accordingly. In such a case, the driver can immediately recognize the influence of his behavior on the recovery of energy since several values of the ratio can be displayed during a deceleration phase of the vehicle. For instance, if the driver modifies the pressure of his foot on the brake pedal, he should see a modification of the information displayed within the driver's compartment.

When steps a) to d) are repeated, it is also possible to add a further step of computing, at each point of time, an average value of the ratio computed in step d), for different points of time during a deceleration phase. This gives another information with respect to the evolution of the energy recovery.

Steps a) to d) and possibly step e) are advantageously repeated during the complete deceleration phase of the vehicle, or on a given period of time, e.g. one minute.

Alternatively, one can compute an average value of the ratio on a given journey of the vehicle.

In such cases, the information displayed in step e) is advantageously representative of the average value of his ratio.

This information can be consulted at the end of a trip, either by the driver or by another person, such as a fleet manager or a driving school instructor.

The invention also concerns a system for implementing the method mentioned here-above. Such a system is for determining the ability of driver of a hybrid vehicle to recover, via at least one recovery device, a part of the kinetic energy of the vehicle during deceleration.

This system comprises at least:

- first means for determining the braking power generated by the recovery device, at a given point of time during deceleration, or the braking energy generated by the recovery device during the deceleration,
- second means for determining the braking power , at said point of time, or the braking energy, during said deceleration, of each braking or retarding device of the vehicle, apart from the electric generator,
- first means for computing the sum of the braking powers or the sum of the braking energies determined by the first and second determination means, and

- second means for computing the ratio of the braking power determined by the first determining means on the braking powers sum computed by the first computing means or the ratio of the braking energy determined by the first determining means on the braking energies sum computed by the first computing means.

Advantageously, the system also comprises displaying means for displaying an information representative of the ratio, within the driver's compartment of the vehicle.

The recovery device may comprise an electric generator, a flywheel and/or a fluid pressure accumulator.

Finally, the invention concerns a hybrid automotive vehicle equipped with an internal combustion engine, at least an electric machine working as a generator or as a motor and a system as mentioned here-above. Such an automotive vehicle facilitates training of drivers and helps them to optimize their driving behavior in order to better recover energy via the electric generator.

BRIEF DESCRIPTIONS OF THE DRAWINGS

The invention will now be explained in correspondence with the annexed figures and as an illustrative example, without restricting the object of the invention. In the annexed figures:

- figure 1 is a schematic representation of a truck embodying the invention,
- figure 2 shows a curve representing the braking power of an exhaust brake as a function of the rotation speed of an engine,
- figure 3 is a block diagram representing a first method of the invention,
- figure 4 is a schematic view of a display used with this invention in a first configuration, and
- figure 5 is a view similar to figure 4 when the display is in another configuration of use.
- figure 6 is a block diagram similar to figure 5 for a second method of the invention.

DETAILED DESCRIPTION OF SOME EMBODIMENTS

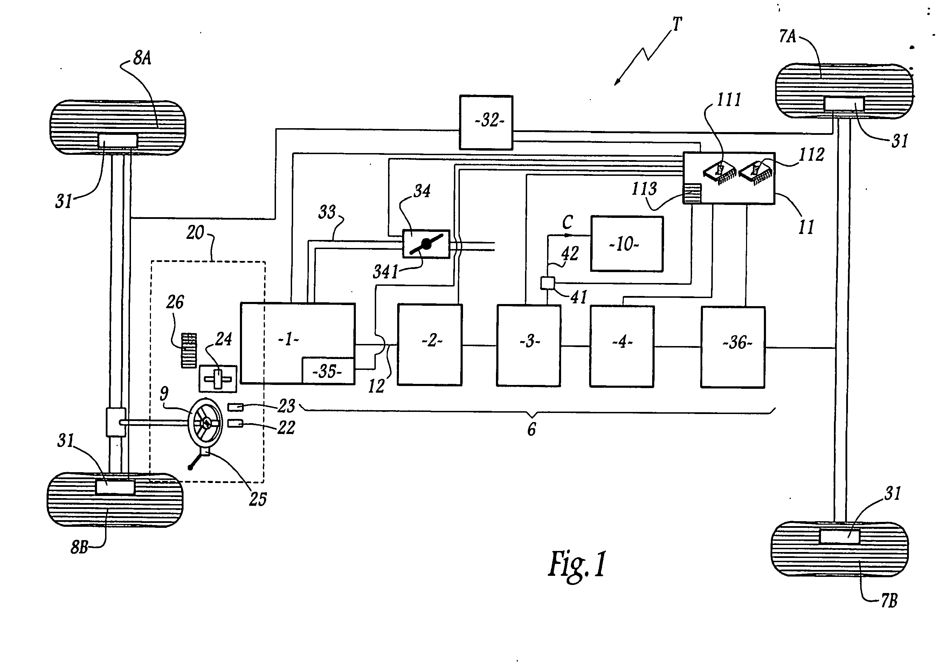

The truck T represented on figure 1 is provided with an internal combustion engine 1, a clutch 2, a reversible electric machine 3, and a gearbox 4. Items 1 to 4 belong to a powertrain 6 of truck T which drives two back wheels 7A and 7B. Truck T is also provided with two front wheels 8A and 8B steered by a steering wheel 9.

Electric machine 3 is connected to a battery set 10 and to an electronic control unit or ECU 11 which pilots all items 1 to 4.

Reference 20 denotes the driver's compartment of truck T where steering wheel 9 is located, together with two pedals 22 and 23, a gearbox control lever 24 and a braking/retarding control module 25 located next to the steering wheel 9. Pedal 22 is a brake pedal and pedal 23 is an accelerator pedal.

A display 26 is also located driver's compartment 20 in a position which allows the driver to watch this display when driving truck T.

Friction brakes 31 are located next to each wheel 7A, 7B, 8A and 8B. These brakes are fed with air under pressure from a feeding assembly 32, e.g. of the type known from EP-A-1 406 805 which is controlled by ECU 11. Items 31 and 32 belong to a service brake sub-system which dissipates the kinetic energy of truck T by friction at the level of the brakes 31 when the user presses on pedal 22.

Engine 1 is provided, on its exhaust line 33, with an exhaust brake 34 which includes a throttle 341 adapted to selectively obturate or substantially obturate exhaust line 33.

Engine 1 is also provided with a compression brake 35 which can modify the working conditions of the inlet and outlet valves of each cylinder of engine 1, in order to use this engine as a braking device.

An eddy current retarder 36 is connected to the output of gearbox 4. Alternatively or in addition, a hydraulic retarder could be used.

Exhaust brake 34, compression brake 35 and retarder 36 are controlled by ECU 11.

When the user wants to decelerate truck T, he can use one or several of items 3, 31, 34, 35 or 36 by acting on pedal 22 and module 25. If the user mainly uses electric machine 3 working as a generator to slow down the crankshaft 12 of engine 1, the energy recovered via electric machine 3 can be transferred to battery set 10 and used at a later stage, when electric machine 3 is used as a motor in order to drive crankshaft 12. Therefore, electric machine 3 is a braking power recovery device for truck T.

On the contrary, the kinetic energy dissipated via the other braking or retarding devices of truck T, namely items 31, 34, 35 and 36 cannot be recovered.

Depending on the pressure of the driver's foot on pedal 22 and/or of his action on control module 25, ECU 11 determines the level of braking power needed. On this basis, ECU 11 actuates one or several of braking/retarding devices 3, 31, 34, 35 and 36. If a low braking power is needed, ECU 11 can actuate only generator 3. If a high braking power is needed, one or several other braking/retarding device(s) is (are) actuated.

Actually, ECU 11 spreads the breaking power request between devices 3, 31, 34, 35 and 36 on the basis of the level of the request and other parameters such as the load level of battery set 10 or the capacity of electric machine 3

According to the invention, one computes a ratio which can be used to inform the driver or another person of the ability of the driver to recover kinetic energy via the electric machine 3 working as a generator.

An ammeter/voltmeter cell 41 is installed on the electric line 42 between machine 3 and battery set 10. This cell 41 is able to measure the voltage V and the intensity I of the electric current C going from machine 3 to battery set 10. Cell 41 provides the corresponding data to ECU 11.

ECU 11 includes a microchip 111 which is capable, on the basis of the data received from unit 1 to compute, at a given point of time t during a deceleration of truck T, the electric power $EP_3$ generated by machine 3 working as a generator as $EP_3(t) = V \times I$. This electric power $EP_3(t)$ is representative of the braking power $P_3(t)$ generated by machine 3 and exerted on crankshaft 12.

If there are several recovery devices, such as several electric machines capable of recovering at least part of the kinetic energy, or other recovery devices such as flywheels or pressure accumulators, the microchip shall preferably compute the individual braking power generated by each of these recovery devices. These individual braking powers, which can be at least partly reused later, can be added.

In all those cases, the power generated by the recovery devices is stored in a storage device, either in a battery, in a flywheel or in an air or a hydraulic pressure accumulator. Therefore, rather than computing the braking power generated by these recovery devices, it would be equivalent to measure the powered stored in the corresponding storage devices

On the other hand, microchip 111 can also determine, on the basis of data received from other components of the vehicle, the braking power of each braking or retarding device 31, 34, 35 and 36 which only dissipate the braking power.

For instance, the braking power of the service brake 31 can be computed by microchip 111 on the basis of a pressure signal sent by pedal 22 and the characteristics of items 31 and 32 given by the manufacturer of these equipments and stored in a memory 113 of ECU 11. One notes $P_{31}(t)$ the braking power of the service brake 31 at a given point of time t.

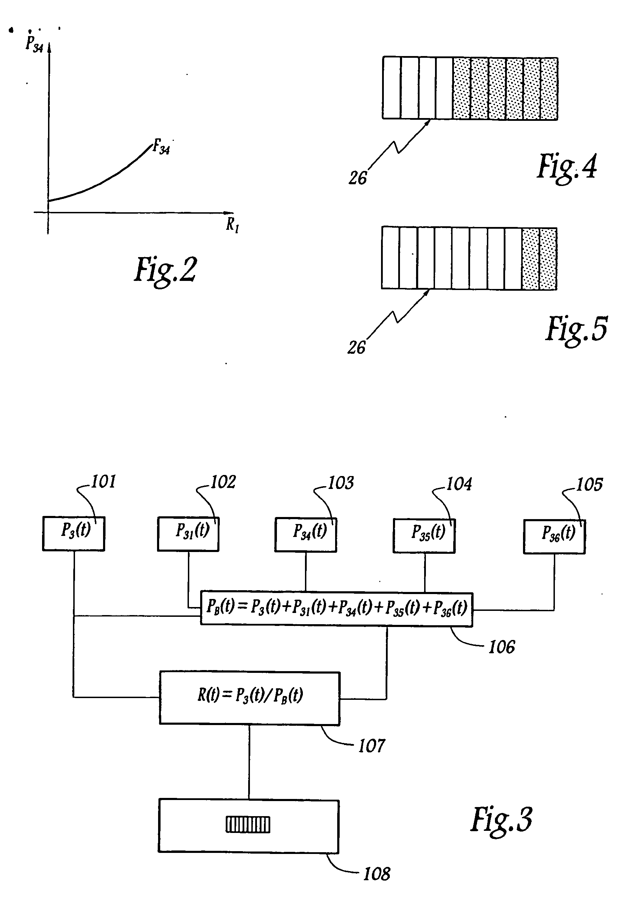

Similarly, it is possible to determine the braking power of exhaust brake 34 at a given point of time t, depending on the rotation speed R of engine 1 at that point of time. As shown on figure 2, the braking power $P_{34}$ of exhaust brake 34 is a known function $F_{34}$ of the rotation speed $R_1$ of engine 1. This function can be stored in memory 113. Therefore, if microchip 111 is informed of the rotation speed $R_1$ of engine 1 and if exhaust brake 34 is activated, ECU 11 can determine the braking power $P_{34}(t)$ of the exhaust brake 34 at a given point of time t.

Similarly, microchip 111 can also determine the braking power $P_{35}(t)$ of compression brake 35 at a given point of time t, the braking power being also dependent on the rotation speed $R_1$ of engine 1, as a function similar to the one represented on figure 2. The corresponding function is also stored in memory 113.

Microchip 111 can also determine the braking power $P_{36}(t)$ of retarder 36 as a function of time, since the intrinsic features of this retarder are known from its manufacturer and can be stored in memory 113. $P_{36}(t)$ also depends on the rotation speed of the output shaft of gearbox 4.

Therefore, during deceleration of truck T initiated by the driver, microchip 111 can compute, at any point of time t, the following braking and retarding powers:

- $P_{31}(t)$, which is the power dissipated in the service brake 31,
- $P_{34}(t)$, which is the power dissipated in the exhaust brake 34,
- $P_{35}(t)$, which is the power dissipated in the compression brake 35, and
- $P_{36}(t)$, which is the power dissipated in the retarder 36.

The sum of these powers represents the power which is dissipated during a deceleration of truck T, at a given time t, and which cannot be used afterwards.

Referring now to figure 3, the method of the invention comprises several steps which take place for a given point of time t during a deceleration phase of truck T.

In a first step 101, power $P_3(t)$ is determined by chip 111, on the basis of the data provided by cell 41.

In a second step 102, power $P_{31}(t)$ is determined by chip 111 on the basis of data received by pedal 22 and of the data provided by the manufacturer of the service brake components 31 and 32 and stored in memory 113.

In a third step 103, the braking power $P_{34}(t)$ of exhaust brake 34 is computed by microchip 111, as explained here-above.

In a fourth step 104, the braking power $P_{35}(t)$ of compression brake 35 is computed by microchip 111, as explained here-above.

In a fifth step 105, microchip 111 computes the braking power of retarder 36, as explained here-above.

The order of steps 101 to 105 can be modified.

After steps 102 to 105, microchip 111 computes, in a further step 106 and for the same point of time t, the sum of all braking powers, namely:

$$P_B(t) = P_3(t) + P_{31}(t) + P_{34}(t) + P_{35}(t) + P_{36}(t).$$

Thereafter, in a further step 107, another microchip 112 computes the ratio:

$$R(t) = P_3(t) / P_B(t).$$

According to an alternative embodiment of the invention, all computations can be made in one microchip, namely microchip 111.

This ratio R(t) can be considered as representative of the proportion of power which is recovered via the electric machine 3, as compared to the total braking power , including the power which is wasted in the classical braking and retarding devices 31, 34, 35 and 36 of truck T.

In a further step 108, an information representative of R(t) is displayed to the driver via display means 26.

Advantageously, and as shown on figures 4 and 5, display means 26 include ten LEDs in the form of vertical bars. These LEDs are either lit when they are powered, as shown on the left on figure 4 or dark, as shown on the right, when they are not powered.

Figure 4 shows the state of display 26 when R(t) is between 0,4 and 0,5. Figure 5 shows the state of display when R(t) is between 0,8 and 0,9.

Display 26 can therefore show ten values, between a case where all LEDs are shut down and a case where they are all lit. The driver can be instructed that the more energy is recovered via the electric machine 3 working as a generator, the more LEDs are lit on display 26.

This information is easily understandable, by the driver or by any person sitting in the driver's compartment 20.

As explained here-above, display 26 can display the value of ratio R(t) for any given point of time t during the deceleration phase.

In practice, one can choose to have the computation of ratio R(t) made at fixed interval during a deceleration of truck T, e.g. every 100 microseconds (ms), which gives enough time to microchips 111 and 112 to make their computations and to activate display 26 in order to show visually an information corresponding to this ratio.

According to another approach, it is also possible to display an information corresponding to an average value of ratio R(t) during one deceleration of truck T. For example, if one deceleration lasts about one second, one can consider ten points of time during deceleration, namely:

$t_1$ 100 ms after the beginning of deceleration,
$t_2$: 200 ms after the beginning of deceleration,
$t_3$: 300 ms after the beginning of deceleration,
...
$t_{10}$: 1 second after the beginning of deceleration.

It is then possible to compute a first value $R(t_1)$ of ratio R for $t_1$. It is also possible to compute a second value $R(t_2)$ of ratio R for $t_2$. Other values of ratio R can be computed as $R(t_i)$ were i is between 3 and 10. One can then compute an average value of R on the first 200 ms of deceleration, namely:

$$R_{1-2} = (R(t_1) + R(t_2)) / 2.$$

The same approach can be followed at each point of time $t_3$ ... $t_{10}$ with

$$R_{1\text{-}i} = (R(t_1) + R(t_2) + \dots R(t_i)) / i$$

where i is between 3 and 10.

This enables the user to have another information on the behavior of the driver, namely the influence of his behavior during one deceleration.

According to another approach, it is also possible to compute an average value $R_A$ of ratio R(t) for different points of time of different deceleration phases during a given journey of truck T. This average value $R_A$ can be stored in memory 113 and checked at the end of the journey, either by the driver or by a fleet manager or an instructor who can comment on the behavior of the driver on the basis of this information.

According to still another approach, it is possible to compute an average value $R_B$ of ratio R(t) on a given period of time $\Delta t$ which corresponds to the last elapsed minute, during the deceleration phases. The period of time $\Delta t$ on which this computation takes place can be adjusted to the last 30 seconds, the last 2 minutes, etc...

Alternatively, an average value $R_C$ of R(t) can be computed from a point of time selected by the driver, up to the current time.

The instantaneous value R(t) or the average values $R_{1\text{-}i}(t)$, $R_A$, $R_B$ or $R_C$ can be stored in memory 113 in order to be analysed and used at a later stage, after completion of a journey by truck T.

Instead of one ECU 11, one can use several ECUs sharing information and exchanging data, e.g. via a data bus or any other onboard network of truck T.

Other average values of ratio R can be computed and/or stored in memory 113, for further analysis by the driver and/or a fleet manager.

According to another method of the invention which can be implemented with the truck T of figure 1, one computes braking energies instead of braking powers. A braking energy $E_i$ generated by a braking or retarding device "i" on a given deceleration "dec" is the integral of the braking power generated by this device on this deceleration and can be expressed as:

$$E_i = \int_{dec} P_i(t)$$

where i equals 3, 31, 34, 35 or 36 with truck T referred here-above.

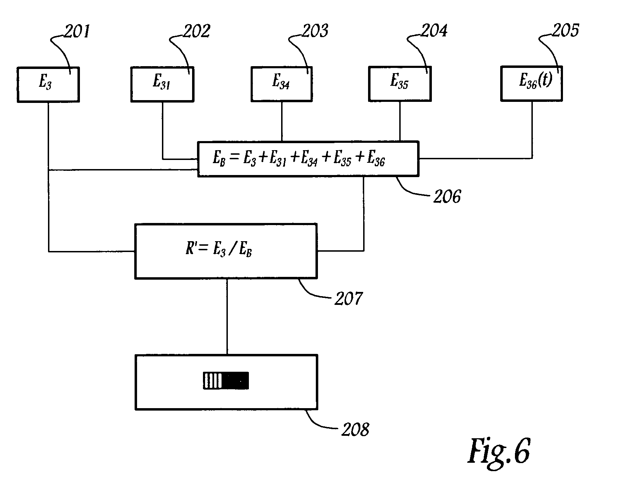

As shown on figure 6, braking energies can be defined for a given deceleration "dec" as follows:

- the braking energy $E_3$ generated by electric machine 3 as:

$$E_3 = \int_{dec} P_3(t)$$

- the braking energy $E_{31}$ dissipated in friction brake 31 as:

$$E_{31} = \int_{dec} P_{31}(t)$$

- the braking energy $E_{34}$ dissipated in exhaust brake 34 as:

$$E_{34} = \int_{dec} P_{34}(t)$$

- the braking energy $E_{35}$ dissipated in compression brake 35 as:

$$E_{35} = \int_{dec} P_{35}(t)$$

- the braking energy $E_{36}$ dissipated in retarder 36 as:

$$E_{36} = \int_{dec} P_{36}(t)$$

.

As shown on figure 6, in a second method of the invention, these braking energies are respectively determined by appropriate means in steps 201 to 205. The order of steps 201 to 205 can be modified in the framework of this invention.

It is then possible to determine a total braking energy $E_B$ for this deceleration, as follows:

$$E_B = E_3 + E_{31} + E_{34} + E_{35} + E_{36}$$

This is done in a further step 206 of the method.

In a still further step 207, a ratio R' can be computed as:

$$R' = E_3 / E_B$$

The value of this ratio R' provides an indication, for a given deceleration, of the proportion of braking energy which is recovered by electric machine 3 with respect to the total braking energy used for this deceleration.

In a still further step 208, the value of ratio R' is displayed in the driver's compartment, preferably in a graphical way.

According to an approach similar to the one mentioned for the first method of the invention, average values of ratio R' can be computed, e.g. on several decelerations, or on a total journey of truck T.

The means used to perform the method of figure 6 can be the same as the means mentioned for the first method, in particular an ECU 11, with microchips 111 and 112, a memory 113 and a detection cell 41.

As for the first embodiment, the braking energy $E_3$ can be determined on the basis of the integral, on the deceleration, of the product $EP_3$ of the intensity by the voltage of an electric current generated by electric machine 3 on this deceleration.

According to alternative embodiments of the invention, one can use, instead of or in addition to electric machine 3, one or several flywheels or one or several fluid pressure accumulators as braking power recovery device(s). Such power recovery devices can be used with a method based on the braking power determination or on the braking energy determination, as mentioned here-above. Ratio R(t) or R' can be defined as mentioned here-above with such additional recovery devices, value $P_3(t)$ or $E_3$ being respectively replaced by values corresponding to the flywheel(s) and/or the fluid pressure accumulator(s).

The invention can be implemented with trucks, buses, personal cars and any other type of hybrid automotive vehicle.

**Claims**

1.  A method for determining the ability of a driver of a hybrid vehicle (T) to recover, via at least one recovery device (3), a part of the kinetic energy of the vehicle during a deceleration, this method comprising at least the following steps:

    a) determination (101; 201) of a braking power ($P_3(t)$) generated by the recovery device (3) at a given point of time (t), during deceleration of the vehicle, or of the braking energy ($E_3$) generated by the recovery device, for a deceleration of the vehicle;

b) determination (102-105; 202-205) of the braking power ($P_{31}(t)$, $P_{34}(t)$, $P_{35}(t)$, $P_{36}(t)$) or of the braking energy ($E_{31}$, $E_{34}$, $E_{35}$, $E_{36}$) dissipated by each braking or retarding device (31, 34, 35, 36) of the vehicle, apart from the recovery device, at said point of time, or during said deceleration;

c) computation (106; 206) of the sum ($P_B(t)$) of the braking powers or the sum ($E_B$) of the braking energies determined in steps a) and b);

d) computation (107; 207) of the ratio ($R(t)$) of the braking power ($P_3(t)$) determined in step a) on the braking powers sum ($P_B(t)$) determined in step c) or of the ratio ($R'$) of the braking energy ($E_3$) determined in step a) on the braking energies sum ($E_B$) determined in step c).

2. Method according to claim 1, wherein it further comprises the following step:

e) display (108; 208) of an information representative of the value of the ratio ($R(t)$; $R'$) within the driver's compartment (20) of the vehicle (T).

3. Method according to claim 2, wherein display of the value of the ratio is made in a graphical way.

4. Method according to one of the previous claims, wherein the recovery device comprises an electric generator and wherein, in step a), the braking power ($P_3(t)$) or the braking energy ($E_3$) is determined on the basis of the product ($EP_3(t)$) of the intensity (I) by the voltage (V) of an electric current (C) generated by the electric generator (3), at the point of time (t), or during the deceleration.

5. Method according to one of the previous claims, wherein, in step b), one determines the braking power ($P_{31}(t)$) of a service brake sub-assembly (31, 32) of the vehicle (T), and/or the braking power ($P_{34}(t)$) of an exhaust brake (34) of the vehicle (T), and/or the braking power ($P_{35}(t)$) of a compression brake (35) of the vehicle (T), and/or the braking power ($P_{36}(t)$) of a driveline retarder (36) of the vehicle (T).

6. Method according to one of claims 1 to 4, wherein, in step b), one determines the braking energy ($E_3$, ) of a service brake sub-assembly (31, 32) of the vehicle (T), and/or the braking energy ($E_{34}$) of an exhaust brake (34) of the vehicle (T), and/or the braking energy ($E_{35}$) of a compression brake (35) of the vehicle (T), and/or the braking energy ($E_{36}$) of a driveline retarder (36) of the vehicle (T).

7. Method according to one of the previous claims, wherein, steps a) to d) (101-107) of determining braking powers, and possibly step e) (108), are repeated at different points of time ($t_1$, $t_2$, ... $t_{10}$), during a deceleration of the vehicle, two consecutive points of time being separated by a given interval (100 ms).

8. Method according to claim 7, wherein it further comprises a step of computing an average value ($R_{1-i}$) of the ratio ($R(t)$) for different points of time ($t_1$, $t_2$, ... $t_{10}$) during a deceleration phase.

9. Method according to one of claims 7 or 8, wherein steps a) to d), and possibly c), are repeated during a complete deceleration phase of the vehicle (T).

10. Method according to one of claims 1 to 6, wherein it further comprises a step of computing an average value ($R_A$) of the ratio ($R(t)$; $R'$) on a given journey of the vehicle.

11. Method according to one of claims 1 to 6, wherein it further comprises a step of computing an average value ($R_B$) of the ratio ($R(t)$) on a given period of time ($\Delta t$).

12. Method according to one of claims 8 to 11, wherein the information displayed in step c) is representative of the average value ($R_{1-I}$, $R_A$, $R_B$, $R_C$) of the ratio ($R(t)$; $R'$).

13. A system for determining the ability of a driver of a hybrid vehicle (T) to recover, via at least one recovery device (3), a part of the kinetic energy of the vehicle during a deceleration, wherein the system comprises at least:

- first means (11, 41) for determining the braking power ($P_3(t)$) generated by the recovery device, at a given point of time (t) during deceleration or the braking energy ($E_3$) generated by the recovery device during the deceleration, ,

- second means (11, 22, 25) for determining the braking power ($P_{31}(t)$, $P_{34}(t)$, $P_{35}(t)$, $P_{36}(t)$), at said point of time, or the braking energy ($E_{31}$, $E_{34}$, $E_{35}$, $E_{36}$), during said deceleration, of each braking or retarding device (31, 34, 35, 36) of the vehicle, apart from the recovery device,
- first means (111) for computing the sum ($P_B(t)$) of the braking powers or the sum ($E_B$) of the braking energies determined by the first and second determination means, and
- second means (112) for computing the ratio ($R(t)$) of the braking power ($P_3(t)$) determined by the first determining means on the braking powers sum ($P_B(t)$) computed by the first computing means or the ratio (R') of the braking energy ($E_3$) determined by the first determining means on the braking energy sum ($E_B$) computed by the first computing means.

14. System according to claim 13, wherein it also comprises display means (26) for displaying an information representative of the ratio ($R(t)$) within the driver's compartment (20) of the vehicle (T).

15. Method according to one of the previous claims, wherein the recovery device comprises an electric generator (3), and/or a flywheel, and/or a fluid pressure accumulator.

16. A hybrid automotive vehicle (T) equipped with an internal combustion engine (1) at least an electric machine (3) working as a generator or as a motor and a system (11, 41) according to one of the claims 13 to 15.

**Patentansprüche**

1. Verfahren zur Bestimmung der Fähigkeit eines Fahrers eines Hybridfahrzeugs (T) zur Wiedergewinnung eines Teils der kinetischen Energie des Fahrzeugs während einer Verzögerung über wenigstens eine Wiedergewinnungsvorrichtung (3), wobei das Verfahren wenigstens die folgenden Schritte umfasst:

   a) Bestimmung (101; 201) einer Bremskraft ($P_3(t)$), die durch die Wiedergewinnungsvorrichtung (3) zu einem gegebenen Zeitpunkt (t) während der Verzögerung des Fahrzeugs erzeugt wurde, oder der Bremsenergie $E_3$), die durch die Wiedergewinnungsvorrichtung für eine Verzögerung des Fahrzeugs erzeugt wurde;
   b) Bestimmung (102-105; 202-205) der Bremskraft ($P_{31}(t)$, ($P_{34}(t)$, ($P_{35}(t)$, ($P_{36}(t)$) oder der Bremsenergie ($E_{31}$, $E_{34}$, $E_{35}$, $E_{36}$), die durch jede Brems- oder Verzögerungsvorrichtung (31, 34, 35, 36) des Fahrzeugs außer der Wiedergewinnungsvorrichtung zu dem Zeitpunkt oder während der Verzögerung dissipiert wurde;
   c) Berechnung (106; 206) der Summe ($P_B(t)$) der Bremskräfte oder der Summe ($E_B$) der Bremsenergien, die in den Schritten a) und b) bestimmt wurden;
   d) Berechnung (107; 207) des Verhältnisses ($R(t)$) der in dem Schritt a) bestimmten Bremskraft ($P_3(t)$) zu der in Schritt c) bestimmten Bremskraftsumme ($P_B(t)$) oder des Verhältnisses (R') der in Schritt a) bestimmten Bremsenergie ($E_3$) zu der Bremsenergiesumme ($E_B$), die in Schritt c) bestimmt wurde.

2. Verfahren nach Anspruch 1, wobei es außerdem den folgenden Schritt umfasst:

   e) Anzeige (108; 208) einer Information, die für den Wert des Verhältnisses ($R(t)$; R') repräsentativ ist, innerhalb der Fahrerkabine (20) des Fahrzeugs (T).

3. Verfahren nach Anspruch 2, wobei die Anzeige des Werts des Verhältnisses graphisch durchgeführt wird.

4. Verfahren nach einem der vorhergehenden Ansprüche, wobei die Wiedergewinnungsvorrichtung einen elektrischen Generator umfasst, und wobei in Schritt a) die Bremskraft ($P_3(t)$) oder die Bremsenergie ($E_3$) auf der Basis des Produkts ($EP_3(t)$) der Stärke (I) mit der Spannung (V) eines elektrischen Stroms (C) bestimmt wird, der durch den elektrischen Generator (3) zu dem Zeitpunkt (t) oder während der Verzögerung erzeugt wird.

5. Verfahren nach einem der vorhergehenden Ansprüche, wobei in Schritt b) die Bremskraft ($P_{31}(t)$) einer Betriebsbremsenuntergruppe (31, 32) des Fahrzeugs (T) und/oder die Bremskraft ($P_{34}(t)$) einer Abgasbremse (34) des Fahrzeugs (T) und/oder die Bremskraft ($P_{35}(t)$) einer Kompressionsbremse (35) des Fahrzeugs (T) und/oder die Bremskraft ($P_{36}(t)$) eines Antriebsstrangretarders (36) des Fahrzeugs (T) bestimmt wird.

6. Verfahren nach einem der Ansprüche 1 bis 4, wobei in Schritt b) die Bremsenergie ($E_{31}$) einer Betriebsbremsenuntergruppe (31, 32) des Fahrzeugs (T) und/oder die Bremsenergie ($E_{34}$) einer Abgasbremse (34) des Fahrzeugs (T) und/oder die Bremsenergie ($E_{35}$) einer Kompressionsbremse (35) des Fahrzeugs (T) und/oder die Bremsenergie ($E_{36}$) eines Antriebsstrangretarders (36) des Fahrzeugs (T) bestimmt wird.

7. Verfahren nach einem der vorhergehenden Ansprüche, wobei die Schritte a) bis d) (101-107) zur Bestimmung der Bremskräfte und möglicherweise Schritt e) (108) zu verschiedenen Zeitpunkten ($t_1$, $t_2$, .... $t_{10}$) während einer Verzögerung des Fahrzeugs wiederholt werden, wobei zwei aufeinanderfolgende Zeitpunkte durch ein vorgegebenes Intervall (100 ms) getrennt sind.

8. Verfahren nach Anspruch 7, wobei es außerdem einen Schritt der Berechnung eines Durchschnittswertes ($R_{1-i}$) des Verhältnisses (R(t)) für verschiedene Zeitpunkte ($t_1$, $t_2$, .... $t_{10}$) während einer Verzögerungsphase umfasst.

9. Verfahren nach einem der Ansprüche 7 oder 8, wobei die Schritte a) bis d) und möglicherweise c) während einer vollständigen Verzögerungsphase des Fahrzeugs (T) wiederholt werden.

10. Verfahren nach einem der Ansprüche 1 bis 6, wobei es außerdem einen Schritt der Berechnung eines Durchschnittswerts ($R_A$) des Verhältnisses (R(t); R') auf einer vorgegebenen Fahrt des Fahrzeugs umfasst.

11. Verfahren nach einem der Ansprüche 1 bis 6, wobei es außerdem einen Schritt der Berechnung eines Durchschnittswerts ($R_B$) des Verhältnisses (R(t)) zu einem vorgegebenen Zeitabschnitt ($\Delta$t) umfasst.

12. Verfahren nach einem der Ansprüche 8 bis 11, wobei die in Schritt c) angezeigten Informationen für den Durchschnittswert ($R_{1-1}$, $R_A$, $R_B$, $R_C$) des Verhältnisses (R(t); R') repräsentativ sind.

13. System zur Bestimmung der Fähigkeit eines Fahrers eines Hybridfahrzeugs (T) zur Wiedergewinnung eines Teils der kinetischen Energie des Fahrzeugs während einer Verzögerung über wenigstens eine Wiedergewinnungsvorrichtung (3), wobei das System wenigstens umfasst:

- eine erste Einrichtung (11, 41) zur Bestimmung der Bremskraft ($P_3$(t)), die durch die Wiedergewinnungsvorrichtung zu einem gegebenen Zeitpunkt (t) während einer Verzögerung erzeugt wurde, oder der Bremsenergie ($E_3$), die durch die Wiedergewinnungsvorrichtung während der Verzögerung erzeugt wurde,
- eine zweite Einrichtung (11, 22, 25) zur Bestimmung der Bremskraft ($P_{31}$(t), ($P_{34}$(t), ($P_{35}$(t), ($P_{36}$(t)) zu dem Zeitpunkt oder der Bremsenergie ($E_{31}$, $E_{34}$, $E_{35}$, $E_{36}$) während der Verzögerung jeder Brems- oder Verzögerungsvorrichtung (31, 34, 35, 36) des Fahrzeugs außer der Wiedergewinnungsvorrichtung,
- eine erste Einrichtung (111) zur Berechnung der Summe ($P_B$(t)) der Bremskräfte oder der Summe ($E_B$) der Bremsenergien, die durch die erste und zweite Bestimmungseinrichtung bestimmt wurden, und
- eine zweite Einrichtung (112) zur Berechnung des Verhältnisses (R(t)) der durch die erste Bestimmungseinrichtung bestimmten Bremskraft ($P_3$(t)) zu der durch die erste Berechnungseinrichtung berechneten Bremskraftsumme ($P_B$(t)) oder des Verhältnisses (R') der durch die erste Bestimmungseinrichtung bestimmten Bremsenergie ($E_3$) zu der durch die erste Berechnungseinrichtung berechneten Bremsenergiesumme ($E_B$).

14. System nach Anspruch 13, wobei es außerdem eine Anzeigeeinrichtung (26) zur Anzeige einer Information umfasst, die für das Verhältnis (R(t)) innerhalb der Fahrzeugkabine (20) des Fahrzeugs (T) repräsentativ ist.

15. Verfahren nach einem der vorhergehenden Ansprüche, wobei die Wiedergewinnungsvorrichtung einen elektrischen Generator (3) und/oder ein Schwungrad und/oder einen Fluiddruckakkumulator umfasst.

16. Hybridkraftfahrzeug (T), das mit einem Verbrennungsmotor (1), wenigstens einer elektrischen Maschine (3), die als Generator oder als Motor arbeitet, und einem System (11, 41) nach einem der Ansprüche 13 bis 15 versehen ist.

**Revendications**

1. Procédé pour déterminer la capacité du conducteur d'un véhicule hybride (T) à récupérer, par l'intermédiaire d'au moins un dispositif de récupération (3), une partie de l'énergie cinétique du véhicule durant une décélération, ce procédé comprenant au moins les étapes suivantes qui consistent à :

a) déterminer (101 ; 201) une puissance de freinage ($P_3$(t)) produite par le dispositif de récupération (3) à un point donné dans le temps (t), durant la décélération du véhicule, ou l'énergie de freinage ($E_3$) produite par le dispositif de récupération pour une décélération du véhicule ;
b) déterminer (102-105 ; 202-205) la puissance de freinage ($P_{31}$(t), $P_{34}$(t) $P_{35}$(t), $P_{36}$(t)) ou l'énergie de freinage ($E_{31}$, $E_{34}$, $E_{35}$, $E_{36}$) dissipée par chaque dispositif de freinage ou de ralentissement (31, 34, 35, 36) du véhicule, autre que le dispositif de récupération, audit point dans le temps ou durant ladite décélération ;

c) calculer (106 ; 206) la somme ($P_B(t)$) des puissances de freinage ou la somme ($E_B$) des énergies de freinage déterminées aux étapes a) et b) ;

d) calculer (107 ; 207) le rapport ($R(t)$) de la puissance de freinage ($P_3(t)$) déterminée à l'étape a) sur la somme des puissances de freinage ($Ps(t)$) déterminée à l'étape c) ou le rapport ($R'$) de l'énergie de freinage ($E_3$) déterminée à l'étape a) sur la somme des énergies de freinage ($E_B$) déterminée à l'étape c).

2. Procédé selon la revendication 1, comprenant en outre l'étape suivante qui consiste à :

e) afficher (108 ; 208) une information représentative de la valeur du rapport ($R(t)$ ; $R'$) dans l'habitacle (20) du véhicule (T).

3. Procédé selon la revendication 2, dont l'affichage de la valeur du rapport est représenté d'une manière graphique.

4. Procédé selon l'une quelconque des revendications précédentes, dont le dispositif de récupération comprend un générateur électrique et dans lequel, à l'étape a), la puissance de freinage ($P_3(t)$) ou l'énergie de freinage ($E_3$) est déterminée sur la base du produit ($EP_3(t)$) de l'intensité (I) par la tension (V) d'un courant électrique (C) généré par le générateur électrique (3), au point dans le temps (t), ou durant la décélération.

5. Procédé selon l'une quelconque des revendications précédentes, dont l'étape b) détermine la puissance de freinage ($P_{31}(t)$) d'un sous-ensemble de frein de service (31, 32) du véhicule (T), et/ou la puissance de freinage ($P_{34}(t)$) d'un frein sur échappement (34) du véhicule (T), et/ou la puissance de freinage ($P_{35}(t)$ d'un frein de compression (35) du véhicule (T), et/ou la puissance de freinage ($P_{36}(t)$) d'un ralentisseur sur chaîne cinématique (36) du véhicule (T).

6. Procédé selon l'une quelconque des revendications 1 à 4, dont l'étape b) détermine l'énergie de freinage ($E_{31}$) d'un sous-ensemble de frein de service (31, 32) du véhicule (T), et/ou l'énergie de freinage ($E_{34}$) d'un frein sur échappement (34) du véhicule (T), et/ou l'énergie de freinage ($E_{35}$) d'un frein de compression (35) du véhicule (T), et/ou l'énergie de freinage ($E_{36}$) d'un ralentisseur sur chaîne cinématique (36) du véhicule (T).

7. Procédé selon l'une quelconque des revendications précédentes, dans lequel les étapes a) à d) (101-107) pour déterminer les puissances de freinage et éventuellement l'étape e) (108) sont répétées à des points dans le temps différents ($t_1$, $t_2$, ... $t_{10}$), durant une décélération du véhicule, sachant que deux points dans le temps consécutifs sont séparés par un intervalle de temps donné (de 100 ms).

8. Procédé selon la revendication 7, comprenant en outre une étape de calcul d'une valeur moyenne ($R_{i-1}$) du rapport ($R(t)$) pour des points dans le temps différents ($t_1$, $t_2$,...$t_{10}$) durant une phase de décélération.

9. Procédé selon l'une quelconque des revendications 7 ou 8, dans lequel, les étapes a) à d) et éventuellement c), sont répétées durant une phase complète de décélération du véhicule T.

10. Procédé selon l'une quelconque des revendications 1 à 6, comprenant en outre une étape de calcul d'une valeur moyenne ($R_A$) du rapport ($R(t)$ ; $R'$) sur un trajet donné du véhicule.

11. Procédé selon l'une quelconque des revendications 1 à 6, comprenant en outre une étape de calcul d'une valeur moyenne ($R_B$) du rapport ($R(t)$) sur une période de temps donnée ($\Delta t$).

12. Procédé selon l'une quelconque des revendications 8 à 11, dans lequel l'information affichée à l'étape c) est représentative d'une valeur moyenne ($R_{1-i}$, $R_A$, $R_B$, $R_C$) du rapport ($R(t)$ ; $R'$)

13. Système pour déterminer la capacité d'un conducteur d'un véhicule hybride (T) à récupérer, par l'intermédiaire d'au moins un dispositif de récupération (3), une partie de l'énergie cinétique du véhicule durant une décélération, ce système comprenant au moins :

- un premier moyen (11, 41) pour déterminer la puissance de freinage ($P_3(t)$) produite par le dispositif de récupération, à un point donné dans le temps (t), durant la décélération, ou l'énergie de freinage ($E_3$) produite par le dispositif de récupération durant la décélération ;

- un second moyen (11, 22, 25) pour déterminer la puissance de freinage ($P_{31}(t)$, $P_{34}(t)$ $P_{35}(t)$, $P_{36}(t)$) audit point dans le temps, ou l'énergie de freinage ($E_{31}$, $E_{34}$, $E_{35}$, $E_{36}$) durant ladite décélération, de chaque dispositif de freinage ou de ralentissement (31, 34, 35, 36) du véhicule, autre que le dispositif de récupération,
- un premier moyen (111) pour calculer la somme ($P_B(t)$) des puissances de freinage ou la somme ($E_B$) des énergies de freinage déterminées par le premier et le second moyens de détermination, et
- un second moyen (112) pour calculer le rapport ($R(t)$) de la puissance de freinage ($P_3(t)$) déterminée par le premier moyen de détermination sur la somme des puissances de freinage ($P_B(t)$) calculée par le premier moyen de calcul ou le rapport (R') de l'énergie de freinage ($E_3$) déterminée par le premier moyen de détermination sur la somme des énergies de freinage ($E_B$) calculée par le premier moyen de calcul.

**14.** Système selon la revendication 13, comprenant en outre un moyen d'affichage (26) pour afficher une information représentative de la valeur du rapport ($R(t)$) dans l'habitacle (20) du véhicule (T).

**15.** Système selon l'une quelconque des revendications précédentes, dont le dispositif de récupération comprend un générateur électrique (3), et/ou un volant d'inertie, et/ou un accumulateur de pression de fluide.

**16.** Véhicule automobile hybride (T) équipé d'un moteur à combustion interne (1) d'au moins une machine électrique (3) agissant en tant que générateur ou en tant que moteur, et d'un système (11, 41) selon l'une quelconque des revendications 13 à 15.

*Fig.1*

Fig.2

26

Fig.4

26

Fig.5

$$P_B(t) = P_3(t) + P_{31}(t) + P_{34}(t) + P_{35}(t) + P_{36}(t)$$

$$R(t) = P_3(t)/P_B(t)$$

Fig.3

$$E_3 \quad 201$$

$$E_{31} \quad 202$$

$$E_{34} \quad 203$$

$$E_{35} \quad 204$$

$$E_{36}(t) \quad 205$$

$$E_B = E_3 + E_{31} + E_{34} + E_{35} + E_{36}$$

$$206$$

$$R' = E_3 / E_B$$

$$207$$

$$208$$

*Fig.6*

**EP 2 349 766 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008075502 A
- JP 2007210487 A
- EP 1406805 A